Europäisches Patentamt

European Patent Office

Office européen des brevets

(19)

(11) Publication number: **0 028 869**
**B1**

# EUROPEAN PATENT SPECIFICATION

(12)

(45) Date of publication of patent specification: **09.03.83**

(51) Int. Cl.³: **B 65 D 21/02, B 29 F 1/022**

(21) Application number: **80201072.8**

(22) Date of filing: **11.11.80**

(54) **A plastics crate or tray and a mould for injection moulding the plastics crate or tray.**

(30) Priority: **12.11.79 NL 7908265**

(43) Date of publication of application:
**20.05.81 Bulletin 81/20**

(45) Publication of the grant of the patent:
**09.03.83 Bulletin 83/10**

(84) Designated Contracting States:
**AT BE CH DE FR GB IT LI LU NL SE**

(56) References cited:
**CA - A - 1 062 635**
**DE - A - 2 001 848**
**FR - A - 2 337 020**
**GB - A - 1 371 240**

(73) Proprietor: **WAVIN B.V.**
**251 Händellaan**
**NL-8031 EM Zwolle (NL)**

(72) Inventor: **Laarhoven, Johannes Josephus**
**16 Scholtensdijk**
**NL-7771 CV Hardenberg (NL)**

(74) Representative: **van der Veken, Johannes Adriaan, Ir. et al,**
**EXTERPATENT 3 & 4 Willem Witsenplein**
**NL-2596 BK The Hague (NL)**

A plastics crate or tray and a mould for injection moulding the plastics crate or tray

The invention relates to a plastics crate or tray comprising a bottom wall, upright walls extending perpendicularly to the bottom wall, a projecting peripheral stacking flange in the region of the bottom wall and a stacking edge or interspaced stacking edge parts projecting downwardly below said bottom wall and spaced inwardly from the upright walls so as to be received within the upper periphery of the upright walls of a like crate or tray.

A plastics crate or tray of this type is known from CA—A—1 062 635.

Said known plastics crate or tray presents the disadvantage, however, that the total weight of a stack of a great number of filled plastics crates or trays will press upon the walls of the lowermost crate or tray, as the stacking edge or stacking edge parts is or are accommodated within the circumference of the upright walls. As the forces occurring in the upright walls of the lowermost plastics crate or tray of a stack cannot be transferred perpendicularly towards the stacking edge parts or the stacking edge, said upright walls of the lowermost crate or tray will sag, even at a relative low loading of the upright walls. Greater loads will cause said upright walls to sag and bulge towards the surface supporting the lowermost plastics crate or tray, for instance a floor or a pallet surface.

It is a main object of the present invention to provide a plastics crate or tray of the aforedescribed type, which does not present these disadvantages.

This object is attained in accordance with the invention in that said upright walls are provided with lower wall parts which converge downwardly so as to terminate directly above the stacking edge or stacking edge parts, whereby when the crates or trays are stacked the loading forces exerted on the lowermost crate or tray are transferred directly from the upright walls to the stacking edge or stacking edge parts.

This feature of converging lower wall parts will still allow a simple and cheap production of the plastics crates or trays by the so-called combined mould which comprises a core, a bottom plate and exchangeable side slides, as the core and the side slides of a mould may be adapted such, that the lowermost part of said core tapers, whilst the side slides extend parallel therewith.

It should be noted that plastics crates or trays comprising upright walls which extend convergingly and end in stacking edge parts or a stacking edge, are known per se. However, said known plastics crates or trays have to be manufactured in expensive moulds, which can be used for one type of crate or tray only. With a view to the latter it goes without saying that smaller series of plastics crates or trays can only be produced at a very high cost price, while novel types of crates or trays to be used in a certain field, are totally excluded, since such an investment is often not justified.

The present invention will be illustrated with respect to embodiments by means of the drawings, wherein:

Figure 1 shows a perspective view of a plastics crate or tray in accordance with the invention;

Figure 1a shows a section through a plastics crate or tray in accordance with the invention, according to line II—II,

Figure 2 is a modified embodiment;

Figure 3 is a section of a combined mould for manufacturing a plastics crate or tray according to the invention;

Figure 4 shows a cross-section of a plastics crate or tray as known in the art;

Figure 5 shows a part of such a plastics crate or tray after its deformation owing to loads;

Figure 6 shows a part of another embodiment of a plastics crate or tray according to the invention and

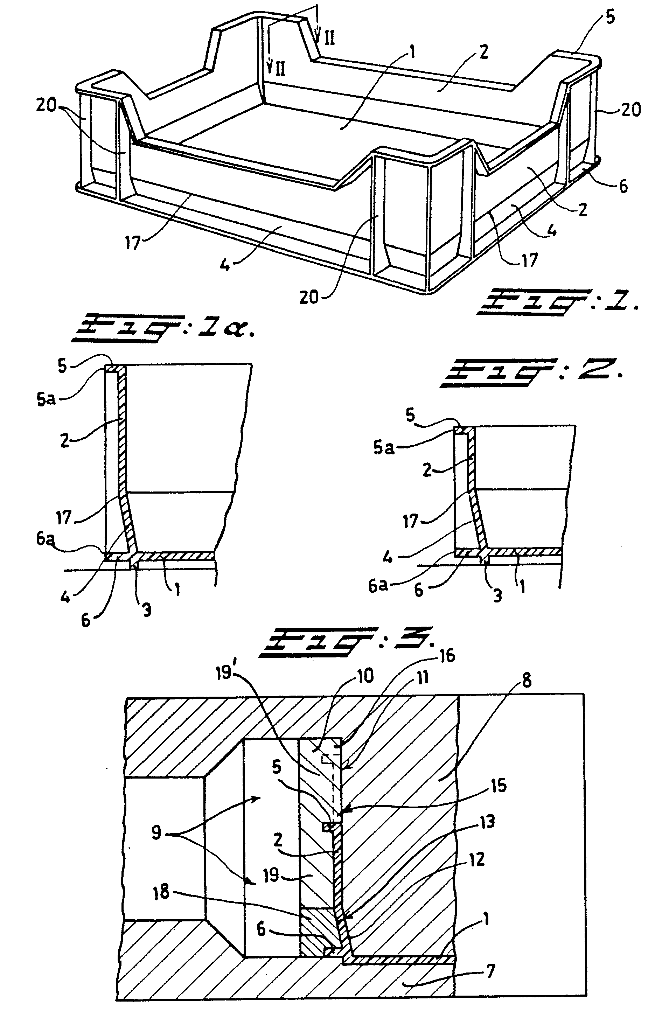

Figure 1 shows a plastics crate or tray comprising a bottom 1 and upright walls 2, which extend substantially perpendicular towards the bottom 1. A stacking edge 3 projects from the lower side of the crate or tray, said stacking edge being situated within the inner circumference of the space bounded by the upright walls 2 as shown in Figure 1a.

Although the upright walls 2 in the plastics crate or tray of Fig. 1 do not have the same height, it will be clear that said walls 2 may also have an equal height all over the crate or tray.

At flexure 17 the upright walls merge into convergingly extending wall parts 4, which end in stacking edge 3. An appropriate height of said converging wall parts is in most cases approximately 5 cm.

Obviously, a circumferentially extending stacking edge 3 may also consist of interspaced stacking edge parts. The stacking edge 3 is integrally formed with the plastics crate or tray by injection moulding.

The upper side of the plastics crate or tray comprises a projecting circumferential upper flange 5, whilst the lower side of the plastics crate or tray comprises a projecting circumferential stacking flange 6 being integral with said plastics crate or tray. The periphery 5a of the circumferential upper flange and the outer side 6a of the circumferential stacking flange are situated substantially vertically below each other.

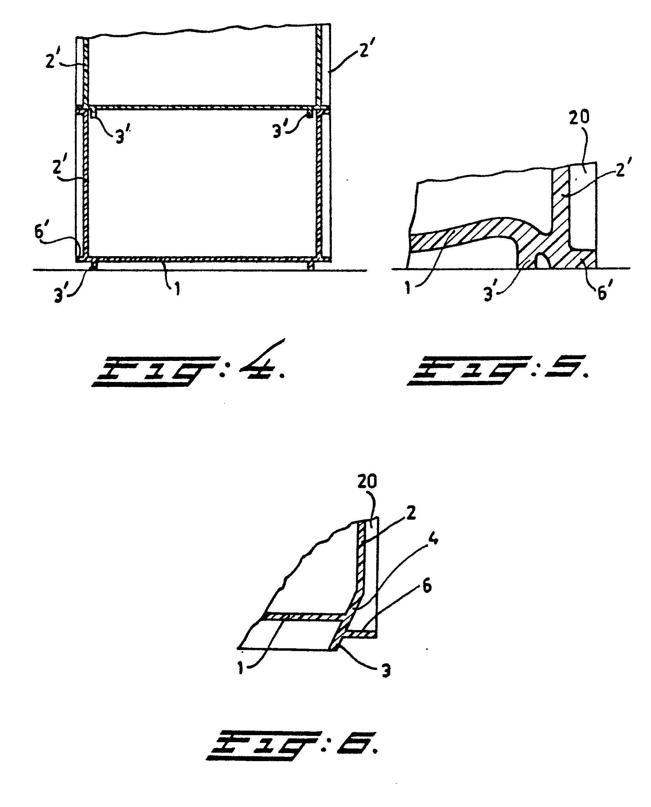

Fig. 2 shows a modified embodiment of a plastics crate or tray comprising upright walls having an even height, all over the plastics crate or tray; the maximum height of said upright walls 2 is, however, considerably lower than the height of the upright walls of the plastics crate or tray according to Fig. 1, 1a, respectively.

The use of a plastics crate or tray according to Fig. 2 provides the beneficial effect, that the loading forces being exerted upon a lowermost plastics crate or tray of a stack of such crates or trays, are transferred directly towards the stacking edge parts or towards the stacking edge 3, which does not hold for a known plastics crate or tray as shown in Fig. 4. In that case the upright walls 2' and the stacking edge 3' are situated staggered with respect to one another, so that in a stack of plastics crates or trays of the latter type great loads will deform the upright wall 2' of the lowest plastics crate or tray in such a manner, that the projecting lower circumferential stacking flange 6' will be pressed upon the bottom 7 supporting the stacking edge (see Fig. 5).

A plastics crate or tray in accordance with the invention, can be easily manufactured through injection moulding by means of a so-called combined mould, consisting of a bottom plate 7, a core 8 and a side slides 9, which cooperate sealingly with core 8 at their upper side 10 (Fig. 3).

So as to obtain the plastics crate or tray in accordance with the invention, core 8 of the mould comprises upright core walls 11 which extend substantially perpendicular towards the the bottom plate 7; the lower side of the core furthermore comprises converging core wall surfaces 12.

The side slides 9 comprises exchangeable side slide plates 18 having tapering outer surfaces 13, which extend parallel with the tapering core wall surfaces 12. The tapering outer surfaces 13 are adjoined by wall parts of exchangeable second side slide plates 19, which wall parts extend substantially perpendicular towards the bottom plate 7.

By changing the height of the side slide plates 19 the height of a plastics crate or tray to be moulded can be easily adapted. In the embodiment drawn in Fig. 3 in full lines the second plate 19 adjoins the core 8 in the vicinity of part 15, such that the plastics crate or tray will obtain a shape as shown in Fig. 2.

In the embodiment of Fig. 3 the second side slide plate 19', illustrated in dotted lines, adjoins the core 8 in the vicinity of the region 16. Thus the height of the upright wall 2 can be considerably increased and, consequently, the height of the entire plastics crate or tray, so that the contents of same is enlarged.

The present invention allows the production of plastics crates or trays of the above-mentioned type, by means of combined moulds, providing a considerable economy on expenditures.

Figure 6 shows a modified embodiment of the lower side of a plastics crate or tray according to the present invention. In this embodiment the circumferential stacking flange 6 is situated between the lower side 3a of the stacking edge 3 and the bottom 1.

Reinforcing ribs 20 extending from the upper flange 5 and the circumferential stacking flange 6, reinforce the upright walls 2.

## Claims

1. A plastics crate or tray comprising a bottom wall (1), upright walls (2) extending perpendicularly to the bottom wall, a projecting peripheral stacking flange (6) in the region of the bottom wall and a stacking edge (3) or interspaced stacking edge parts projecting downwardly below said bottom wall and spaced inwardly from the upright walls so as to be received within the upper periphery of the upright walls of a like crate or tray, characterised in that said upright walls (2) are provided with lower wall parts (4) which converge downwardly so as to terminate directly above the stacking edge (3) or stacking edge parts, whereby when the crates or trays are stacked the loading forces exerted on the lowermost crate or tray are transferred directly from the upright walls (2) to the stacking edge (3) or stacking edge parts.

2. A plastics crate or tray according to claim 1, characterized in that the upper side of the crate or tray comprises a projecting circumferential flange (5).

3. A plastics crate or tray according to claim 1 or 2, in which the stacking flange (6) is connected with reinforcing ribs (20), upon the outer side of the plastics crate or tray.

4. A plastics crate or tray according to anyone of claims 1 to 3, characterized in that the circumferential stacking flange (6) is situated at distance from the lower side of the stacking edge (3) or the stacking edge parts, but below the transition (17) between the upright walls (2) and the convergingly extending lower wall parts (4).

5. A mould for injection moulding a plastics crate or tray according to any preceding claim comprising a core (8) and a bottom plate (7) and exchangeable side slides (9) which cooperate with the core to define a space for forming said upright walls (2), said bottom wall (1) and said downwardly projecting stacking edge (3) or stacking edge parts, characterized in that a lower part of said core (8) has wall surfaces (12) which converge downwardly and said slides have lower wall surfaces (13) which are parallel to said core wall surfaces (12), the inclination of the wall surfaces being such as to define a wall-forming space which extends downwardly and inwardly to a location directly above the region in the mould of the formation of the stacking edge or edge parts.

6. A mould according to claim 5, characterized in that the side slides comprise first (18) and second slide parts or plates (19).

## Patentansprüche

1. Kunststoffsteige oder -kasten, bestehend aus einer Bodenwand (1), senkrecht zur Bodenwand verlaufenden aufrechten Wänden (2), einem vorstehenden, sich in Umfangsrichtung erstreckenden Stapelflansch (6) im Bereich der Bodenwand und einem Stepelrand (3) oder beabstandeten Stepelrandteilen, die sich unterhalb der Bodenwand nach unten erstrecken und von den aufrechten Wänden zur Aufnahme innerhalb des oberen Umfangs der aufrechten Wände einer gelichen Steige oder eines gleichen Kastens nach innen versetzt sind, dadurch gekennzeichnet, daß die aufrechten Wände (2) mit unteren Wandteilen (4) versehen sind, die derart nach unten konvergieren, daß sie unmittelbar über dem Stapelrand (3) oder Stapelrandteilen auslaufen, wobei bei gestapelten Steigen oder Kästen die auf die unterste Steige oder den untersten Kasten ausgeübten Belastungskräfte unmittelbar von dem aufrechten Wänden (2) auf den Stapelrand (3) oder Stapelrandteile übertragen werden.

2. Kunststoffsteige oder -kasten nach Anspruch 1, dadurch gekennzeichnet, daß die Oberseite der Steige oder des Kastens einen vorstehenden Umfangsflansch (5) umfaßt.

3. Kunststoffsteige oder -kasten nach Anspruch 1 oder 2, dadurch gekennzeichnet, daß der Stapelflansch (6) mit Verstärkungsrippen (20) auf der Außenseite der Kunststoffsteige oder des -kastens verbunden ist.

4. Kunststoffsteige oder -kasten nach einem der Ansprüche 1 bis 3, dadurch gekennzeichnet, daß der sich in Umfangsrichtung erstreckende Stapelflansch (6) in einem Abstand von der Unterseite des Stapelrandes (3) oder der Stapelrandteile, jedoch unterhalb des Übergangs (17) zwischen den aufrechten Wänden (2) und den konvergierend verlaufenden unteren Wandteilen (4) angeordnet ist.

5. Form zum Spritzgießen einer Kunststoffsteige oder eines -kastens nach einem der vorhergehenden Ansprüche, bestehend aus einem Kern (8) und einer Bodenplatte (7) sowie austauschbaren Seitenschiebeteilen (9), die mit dem Kern zur Bildung eines Raums zum Formen der aufrechten Wände (2), der Bodenwand (1) und des sich nach unten erstreckenden Stapelrandes (3) oder von Stapelrandteilen zusammenwirken, dadurch gekennzeichnet, daß der untere Teil des Kerns (8) Wandflächen (12) aufweist, die nach unten konvergieren, und die Schiebeteile untere Wandflächen (13) aufweisen, die parallel zu den Kernwandflächen (12) sind, wobei die Neigung der Wandflächen derart getroffen ist, daß ein wandbildender Raum begrenzt ist, der sich nach unten und inner zu einer Stelle unmittelbar über dem Formbereich zur Bildung des Stapelrandes oder der -randteile erstreckt.

6. Form nach Anspruch 5, dadurch gekennzeichnet, daß die Seitenschiebeteile erste (18) und zweite Schiebeteile oder Platten (19) umfassen.

Revendications

1. Cageot ou plateau en matière plastique comprenant une paroi de fond (1), des parois verticales (2) s'étendant perpendiculairement à la paroi de fond, une bordure périphérique saillante de gerbage (6) dans la région de la paroi de fond et un bord de gerbage (3) ou des parties de bord de gerbage espacées faisant saillie vers le bas sous ladite paroi de fond et décalées intérieurement par rapport aux parois verticales de façon à être reçues à l'intérieur de la périphérie supérieure des parois verticales d'un cageot ou d'un plateau identique, caractérisé en ce que lesdites parois verticales (2) sont pourvues de parties de paroi inférieures (4) qui convergent vers le bas de façon à se terminer directement au-dessus u bord de gerbage (3) ou des parties de bord de gerbage, ce qui fait que quand les cageots ou les plateaux sont empliés, les charges s'exerçant sur le cageot ou le plateau inférieur sont transmises directement des parois verticales (2) au bord de gerbage (3) ou aux parties de bord de gerbage.

2. Cageot ou plateau en matière plastique selon la revendication 1, caractérisé en ce que la face supérieure de cageot ou du plateau comporte une bordure circonférentielle saillante (5).

3. Cageot cu plateau en matière plastique selon la revendication 1 ou 2, dans lequel la bordure de gerbage (6) est reliée à des nervures de renfort (20) sur la face extérieure de cageot ou du plateau.

4. Cageot ou plateau en matière plastique selon l'une quelconque des revendications 1 à 3, caractérisé en ce que la bordure de gerbage circonférentielle (6) est située à distance du côté inférieur du bord de gerbage (3) ou des parties de bord de gerbage, mais sous la transition (17) entre les parois verticales (2) et les parties de paroi inférieures convergentes (4).

5. Moule pour mouler par injection un cageot ou un plateau en matière plastique selon l'une quelconque des revendications précédentes, comprenant un noyau (8) et une plaque de fond (7) et des curseurs latéraux échangeables qui coopèrent avec le noyau pour définir un espace pour former lesdites parois verticales (2), ladite paroi de fond (1) et ledit bord de gerbage s'avançant vers le bas (3) ou les parties de bord de gerbage, caractérisé en ce qu'une partie inférieure dudit noyau (8) a des surfaces de paroi (12) qui convergent vers le bas et en ce que lesdits curseurs ont des surfaces de paroi inférieures (13) qui sont parallèles auxdites surfaces de paroi de noyau (12), l'inclinaison des surfaces de paroi étant telle qu'elles définissent un espace de formation de paroi qui s'étend vers le bas et vers l'intérieur à un emplacement situé directement au-dessus de la région du moule dans laquelle est formé le bord de gerbage où sont formées les parties de bord.

6. Moule selon la revendication 5, caractérisé en ce que les curseurs latéraux comprennent une première partie ou plaque (18) et une seconde partie ou plaque (19).

FIG:1.

FIG:1a.

FIG:2.

FIG:3.

_Fig.4._

_Fig.5._

_Fig.6._